(19) Europäisches Patentamt / European Patent Office / Office européen des brevets

(11) **EP 2 881 747 A1**

(12) **EUROPEAN PATENT APPLICATION**

(43) Date of publication:
**10.06.2015   Bulletin 2015/24**

(51) Int Cl.:
**G01Q 60/18** (2010.01)       **G01Q 60/22** (2010.01)
**G02B 6/26** (2006.01)       G02B 21/00 (2006.01)

(21) Application number: **13195786.2**

(22) Date of filing: **05.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **S.I.S.S.A. Scuola Internazionale Superiore di Studi Avanzati**
  **34136 Trieste (IT)**
• **Rapp OptoElectronic GmbH**
  **22559 Hamburg (DE)**

(72) Inventors:
• **Torre, Vincent**
  **34136 TRIESTE (IT)**
• **Mazzolini, Monica**
  **34136 TRIESTE (IT)**
• **Lazzarino, Marco**
  **34136 TRIESTE (IT)**
• **Andolfi, Laura**
  **I-34149 Trieste (IT)**

(74) Representative: **Spadaro, Marco et al**
  **Cantaluppi & Partners**
  **Viale della Tecnica, 205**
  **00144 Roma (IT)**

(54) **Device, apparatus and system for use in photonics, nanotechnology, microscopy and biology**

(57)     The present invention relates to an apparatus for use in photonics, nanotechnology, microscopy and biology, in particular in optogenetics investigation characterized in that it comprises at least one apertureless optical fibre (TOF). Preferably, said TOF is partially coated or completely coated by a metal film. According to the present invention, said apertureless optical fibre shows a light profile intermediate between a 0 order Bessel function Jo and a top hat function. This light profile has a light profile sharper than that emitted from a cleaved optical fibre and the light intensity is confined entirely in the inner region and no photons are present in the outer region, thus reducing to zero the background signal.

FIGURE 1 d)

EP 2 881 747 A1

**FIGURE 1 e)**

TOF

OS

Suction
electrode

**EP 2 881 747 A1**

## Description

The present invention relates to devices, equipment and systems useful in the investigation in several fields where highly confined light beams are useful and/or necessary.

Several applications of Photonics and Nanotechnology require highly localized beams of light in the far field-range. Also, several applications of Microscopy need an illumination over some micron size areas.

There is a large variety of biological problems which are investigated by making a wide use of light sensitive molecules, such as caged compounds and light sensitive receptors, for example the analysis of vertebrate and invertebrate photoreceptors

Recent developments in Chemistry have provided Biology with an increasing number of light-sensitive compounds with major biological relevance. There is now a large selection of caged molecules which can be released by light photolysis (Ellis-Davies GC: Caged compounds: photorelease technology for control of cellular chemistry and physiology. Nat Methods 2007, 4:619-628.), such as calcium ions (Ellis-Davies GC: Neurobiology with caged calcium. Chem Rev 2008, 108:1603-1613.), glutamate (Wieboldt R, Gee KR, Niu L, Ramesh D, Carpenter BK, Hess GP: Photolabile precursors of glutamate: synthesis, photochemical properties, and activation of glutamate receptors on a microsecond time scale. Proc Natl Acad Sci U S A 1994, 91:8752-8756.) and GABA (Rial Verde EM, Zayat L, Etchenique R, Yuste R: Photorelease of GABA with visible light using an inorganic caging group. Front Neural Circuits 2008, 2:2.). The engineering of light sensitive ion channels, such as the light activated glutamate channel (Volgraf M, Gorostiza P, Numano R, Kramer RH, Isacoff EY, Trauner D: Allosteric control of an ionotropic glutamate receptor with an optical switch. Nat Chem Biol 2006, 2:47-52.), the light activated $K^+$ channels (Banghart M, Borges K, Isacoff E, Trauner D, Kramer RH: Light activated ion channels for remote control of neuronal firing. Nat Neurosci 2004, 7:1381-1386.) and those based on modifications of the rhodopsin molecule, such as the light-gated proton channel, channelrhodopsin (Boyden ES, Zhang F, Bamberg E, Nagel G, Deisseroth K: Millisecond-timescale, genetically targeted optical control of neural activity. Nat Neurosci 2005, 8:1263-1268.) and the chloride ion pump halorhodopsin (Zhang F, Wang LP, Brauner M, Liewald JF, Kay K, Watzke N, Wood PG, Bamberg E, Nagel G, Gottschalk A et al.: Multimodal fast optical interrogation of neural circuitry. Nature 2007, 446:633-639.) offer biologists powerful tools to investigate neuronal networks. A light switch can also be inserted in metabotropic receptors such as the adrenergic receptor (Airan RD, Thompson KR, Fenno LE, Bernstein H, Deisseroth K: Temporally precise in vivo control of intracellular signalling. Nature 2009, 458:1025-1029) and in specific proteins such as Rac (Wu YI, Frey D, Lungu OI, Jaehrig A, Schlichting I, Kuhlman B, Hahn KM: A genetically encoded photoactivatable Rac controls the motility of living cells. Nature 2009, 461:104-108.). These novel probes offer also the opportunity to analyze the biological effects of the activation of a reduced number of ion channels, receptors and proteins possibly at a single molecule level. In this case it is mandatory to have light beams with well defined wave front profiles, possibly without the Gaussian lobes present when standard light sources are used.

Another important field of interest in Biology is Optogenetics. Optogenetics is a modulation technique employed in neuroscience and cell biology that uses a combination of techniques from optics and genetics to control and monitor the activities of individual neurons in living tissue - even within freely-moving animals - and to precisely measure the effects of those manipulations in real-time. The key reagents used in optogenetics are light-sensitive proteins. Spatially-precise neuronal control is achieved using optogenetic actuators, such as those mentioned above, like channel-rhodopsin, halorhodopsin, and archaerhodopsin, while temporally-precise recordings can be made with the help of optogenetic sensors like Cameleon, Mermaid, and SuperCameleon.

Millisecond-scale temporal precision is central to optogenetics, which allows the experimenter to keep pace with fast biological information processing (for example, in probing the causal role of specific action potential patterns in defined neurons). Indeed, to probe the neural code, optogenetics by definition must operate on the millisecond timescale to allow addition or deletion of precise activity patterns within specific cells in the brains of intact animals, including mammals. It is important to also have fast readouts in optogenetics that can keep pace with the optical control. This can be done with electrical recordings ("optrodes") or with reporter proteins that are biosensors, where scientists have fused fluorescent proteins to detector proteins.

Optogenetics also necessarily includes 1) the development of genetic targeting strategies such as cell-specific promoters or other customized conditionally-active viruses, to deliver the light-sensitive probes to specific populations of neurons in the brain of living animals (e.g. worms, fruit flies, mice, rats, and monkeys), and 2) hardware (e.g. integrated fiberoptic and solid-state light sources) to allow specific cell types, even deep within the brain, to be controlled in freely behaving animals. Most commonly, the latter is now achieved using the fiberoptic-coupled diode technology introduced in 2007, though to avoid use of implanted electrodes, researchers have engineered ways to inscribe a "window" made of zirconia that has been modified to be transparent and implanted in mice skulls, to allow optical waves to penetrate deeper in the brain to stimulate or inhibit individual neurons.

To stimulate superficial brain areas such as the cerebral cortex, optical fibers or LEDs can be directly mounted to the skull of the animal. Deeper implanted optical fibers have been used to deliver light to deeper brain areas.

The field of optogenetics has furthered the fundamental scientific understanding of how specific cell types contribute to the function of biological tissues such as neural circuits *in vivo.* Moreover, on the clinical side, optogenetics-driven research has led to insights into Parkinson's disease and other neurological and psychiatric disorders. Indeed, optogenetics papers in 2009 have also provided insight into neural codes relevant to autism, Schizophrenia, drug abuse, anxiety, and depression.

It has been pointed out that beyond its scientific impact, optogenetics also represents an important case study in the value of both ecological conservation (as many of the key tools of optogenetics arise from microbial organisms occupying specialized environmental niches), and in the importance of pure basic science.

*In vivo* optogenetic activation and/or silencing has been recorded in several brain regions and cell-types.

Optical fibers are used in these fields, in particular in optogenetics. Examples of these applications are disclosed for example in CN102151367, US2011224554, WO2011/005978, and US2009/0304551.

Beams of light exiting from conventional optical fibers have a Gaussian profile (Sim et al., 2011) and this poses the problem of spot of light with a very precise and controlled intensity profile, polarization and duration.

Conventional fiber optics used in the field of optogenetics and in the technical field where a spot of light with precise and controlled characteristics is necessary cannot solve the problem of the Gaussian profile.

It has surprisingly been found that apertureless tapered optical fibres (TOFs) solve this problem.

**Summary of the invention**

It is an object of the present invention an apparatus for use in photonics, nanotechnology, microscopy and biology, in particular in optogenetics investigation characterized in that it comprises at least one apertureless optical fibre (also said apertureless tapered optical fibres, TOFs).

According to a first embodiment of the present invention, said apertureless optical fibre is partially coated or completely coated by a metal film. Suitable metal for coating is a metal which stably adheres to the fibre surface. For applications on live samples and in presence of biological material, the metal must be non toxic. Example for this kind of application is gold film on titanium layer, a non limitative example is 10 nm Ti/20 nm Au. A coating by gold and chromium can be used in application of photonics, nanotechnology and microscopy in the absence of live samples or in the presence of biological material which has been fixed.

According to a second embodiment of the present invention, said apertureless optical fibre shows a light profile intermediate between a 0 order Bessel function $J_0$ and/or a top hat function. This profile retains the concentric circles typical of Bessel function and/or the sharp profile typical of a top hat profile. This light profile, which depends on the tapering angle, has a light profile sharper than that emitted from a cleaved optical fibre. The light intensity is confined entirely in the inner region and no photons are present in the outer region, thus reducing to zero the background signal. Typical diameter of inner region is 6 $\mu$m and a typical far field light cone has a semiaperture of 15 deg. These values however may be varied in a range from 2 to 30 $\mu$m and 5 to 30 degs depending on fibre core diameter and tapering angle.

According to another object of the present invention said apparatus further comprises an optical light generating device ranging from ultraviolet to infrared region.

A coherent light device is, for example, a laser device.

The apparatus of the present invention is now disclosed for the exemplary embodiment of a laser device as light generating device, being intended that the description applies to a generic light source.

Preferably, said device comprises said tapered optical fibre coated by gold on titanium layer for biological applications and coated by gold and chromium for other applications without live samples.

In a preferred embodiment of the present invention, in said light laser device said fibre shows a light profile intermediate between a 0 order Bessel function J0 and a top hat function. Preferably, the exiting beam of light at 1-5 microns from the TOF apex has a profile with a width of 2-5 $\mu$m with almost no side lobes.

In an embodiment of the present invention, in said light laser device said the exiting light from the TOF has an angle comprised between 5 and 30°.

In another embodiment of the present invention, said light laser device is coupled with a microscope. Preferably, said microscope is an inverted microscope, but an up-right microscope can also be used

In another embodiment of the present invention, in said light laser device said tapered optical fibre is mounted on a micromanipulator.

In another embodiment of the present invention, said light laser device is coupled with a camera. Preferably, said camera is a dual camera port with different magnification. More preferably, said camera is an ultrasensitive CCD camera.

In another embodiment of the present invention, in said light laser a device for programming pulse trains is provided.

In another embodiment of the present invention, in said light laser a device for programming pulse trains is provided. Preferably said device is able to programming pulse trains of arbitrary length with intensities over a dynamic range of 4 to 5 orders of magnitude.

Advantageously, these embodiments make the device very versatile.

In another embodiment of the present invention, said light laser is a 491 nm laser. Laser wavelength is selected according to the specific investigation to be made, based on conventional criteria.

In another embodiment of the present invention, said light laser further comprises at least an acousto-optic modulator, a rapid filter wheel, optionally with a set of neutral density filters, one or more port for fibre optics with shutters on each port, a microcontroller and a software to program pulse trains.

The present invention will be disclosed in detail also by means of Figures and Examples.

In the Figures:

Figure 1A shows an embodiment of the apparatus of the present invention wherein two cameras are mounted onto the side port of a microscope.

Figure 1B-C shows the performance of the system: an image of a test grid with 10x objective mounted on port 1 (1b) and on port 2 with magnification optics (1c).

Figure 1D shows an embodiment of the apparatus of the present invention in the form of a laser device and its controller.

Figure 1E shows an embodiment of the present invention in the arrangement of an outer segment (OS), suction electrode and apertureless optical fibre (TOF).

Figure 1F shows the photoresponses to the diffuse saturating flashes (black trace) and flashes delivered by optical fibres with a 1 $\mu$m hole (grey traces).

Figure 1G shows the photoresponses to the diffuse saturating flashes.

Figure 1H shows the photoresponses to diffuse (black traces) and restricted lights (gray traces) family of light responses obtained form flashes at different intensity in arbitrary units (a.u.) delivered by the apertureless TOFs in the middle of the OS - arrows).

Figure 2 shows the spatial profile of the light emitted by the apertureless optical fibre in relation of fibre-sensor distance (2a) and the measured light profile below 10 $\mu$m (2b).

Figure 3 shows the estimated cGMP diffusion coefficient ($D_{cGMP}$).

Figure 4 shows a model in which the base of the OSs is illuminated, to estimate $D_{cGMP}$.

Figures 5 and 6 show photoresponses to very dim flashes, as low as corresponding to a single photon absorption, evoked by the TOF at the middle of the rod.

Figure 7 shows photoresponses when the rod was used as a light detector and when the apertureless TOF was moved at various positions relative to the OS.

Figure 8 shows normalised current-intensity response with diffuse (black circles, n=6) and restricted light for the base (dark grey triangles, n = 5), middle (grey circles, n= 9) and tip (light gray triangles, n=6) positions. Dark squares (n = 4) show response with optical fibre with 1 $\mu$m hole.

## Detailed description of the invention

### Cameras and laser system

Experiments often require visualization of the sample at different magnification levels. However, changing objectives causes mechanical vibration which in turn may lead to loss of the patch (or stability between rod, suction electrode and TOF).

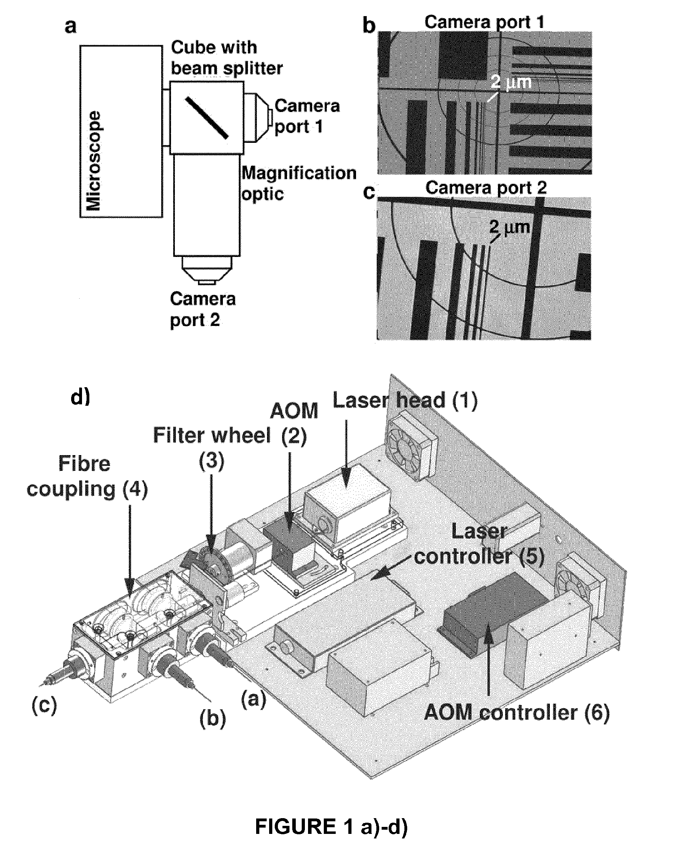

Therefore, a dual camera port with different magnification has been developed. The layout and the performance of this system is shown on Figure 1a-c.

The basic requirements for the system in order to stimulate the OS of the photoreceptors are (1) stable and reproducible laser power and (2) the possibility to program pulse trains of arbitrary length with intensities over a broad dynamic range of 4 to 5 orders of magnitude.

In an exemplary embodiment of the present invention, set up for the study of rod photoreceptors and referring to Figure 1d, a system comprising a highly stable continuous 491nm laser module (1), an acousto-optic modulator (AOM) (2), a rapid filter wheel with a set of neutral density filters to attenuate the beam able to change filters in about 20ms, three ports for fibre optics (a), (b), (c) with shutters on each port, a micro-controller and software to program pulse trains. The AOM serves as a rapid switch for the laser and additionally for attenuating the beam over almost two orders of magnitude. The filter wheel is equipped with neutral density filters of OD1, OD2 and OD3. Hence the dynamic range of the system covers almost 5 orders of magnitude. Two TOFs and one light guide for diffuse illumination are connected to the fibre optic ports.

A laser controller (4) and an AOM controller (5) are conveniently provided.

Two cameras (Figure 1a) are mounted onto the side port of the microscope. In order to show the performance of the system, an image of a test grid with 10x objective mounted on port 1 (Figure 1b) and on port 2 with magnification optics (Figure 1c) is shown. The laser power (100 mW) is distributed to the three ports using beam splitters. Each of the two ports connected to the TOFs receives 45% of the laser power whereas 10% of the power is directed to the port with a multimode fibre for diffuse illumination.

The apertureless optical fibres used in the present invention are commercially available or can be made according to conventional methods.

The present invention will be further illustrated by reference to an exemplary embodiment showing how restricted spots of light obtained thanks to the apertureless optical fibres used in the device of the present invention reveal an efficacy gradient of the phototransduction cascade along the rod outer segment.

Rod photoreceptors consist of an outer segment (OS) and an inner segment (IS). Inside the OS a biochemical machinery transforms the absorption of photons into electrical signals (Yoshizawa and Wald, 1963; Fung and Strayer, 1980; Baylor et al., 1979). This biochemical machinery has been treated and thought to be fairly homogenous within OSs with marginal dishomogeneities (Lamb et al., 1981; Schnapf, 1983; Jarvinen and Lamb, 2005). By using traditional optical fibres, which give a Gaussian profile, it is not possible to verify this assumption.

Using the apertureless optical fibres (TOFs) according to the present invention to deliver highly-localized light stimuli to OSs, we noted that as the TOF is moved from the OS base towards its tip, the amplitude of both the saturating response and the single-photon response decreased, demonstrating a pronounced reduction in the efficacy of the phototransduction machinery. We have determined that this reduction in efficacy reflects a reduction in PDE levels along the OS, associated with discs aging. From measurements of the gradient of the saturating responses elicited by local flashes at different positions, we calculated that the longitudinal diffusion coefficient for cyclic guanosine monophosphate (cGMP) is between 360-550 $\mu$m$^2$/s. As a result of this high diffusion coefficient, cyclic nucleotide-gated (CNG) channels near the tip of the outer segment are closed by diffuse flashes of light, despite the very low level of PDE in the discs in that region.

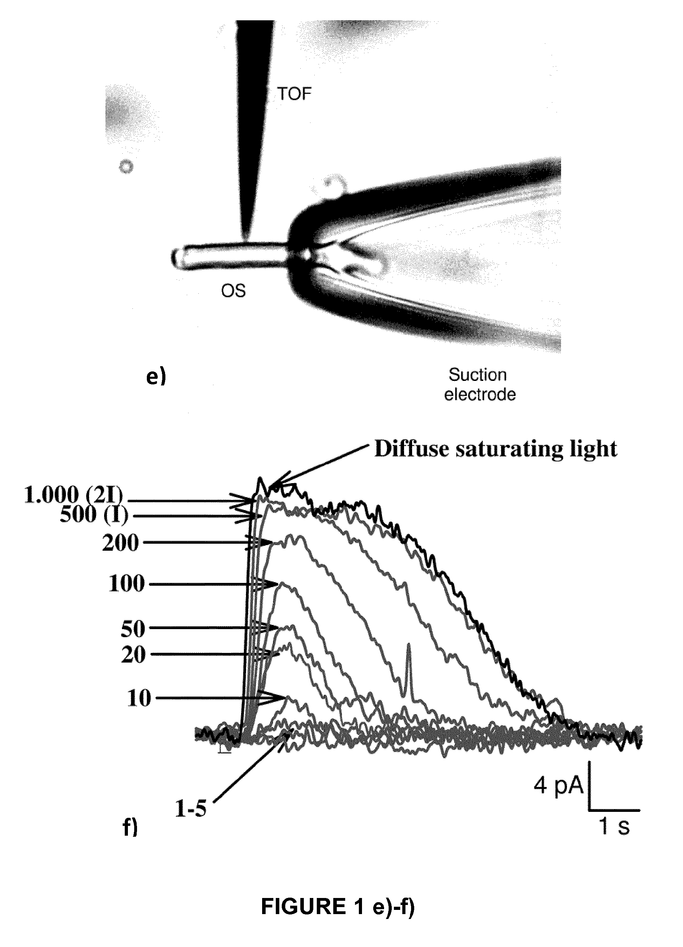

The OS is stacked with thousands of lipid discs containing rhodopsin molecules that absorb photons (Yoshizawa and Wald, 1963; Fung and Strayer, 1980; Baylor et al., 1979; Baylor et al., 1984). Within 1 s, each excited rhodopsin activates tens of G-proteins, each of which activates a phosphodiesterase molecule (PDE) (Baehr et al., 1979; Fung et al, 1981; Dumke et al., 1994; Melia et al., 1997; Melia et al., 2000; Leskov et al., 2000). Activated PDEs rapidly hydrolyse cytoplasmic cGMP thereby closing cyclic nucleotide-gated (CNG) channels (Fesenko et al., 1985; Kaupp and Seifert, 2002). In darkness, a current carried by Na$^+$, K$^+$ and Ca$^{2+}$ ions, which is known as the photocurrent, enters via CNG channels into the OS and is pumped out by Na$^+$/K$^+$ ATPase, located in the IS (Pugh and Lamb, 2000). This current can be recorded using suction electrodes (Baylor et al., 1979a,b; Rieke and Baylor, 1998 and see Figure 1E).

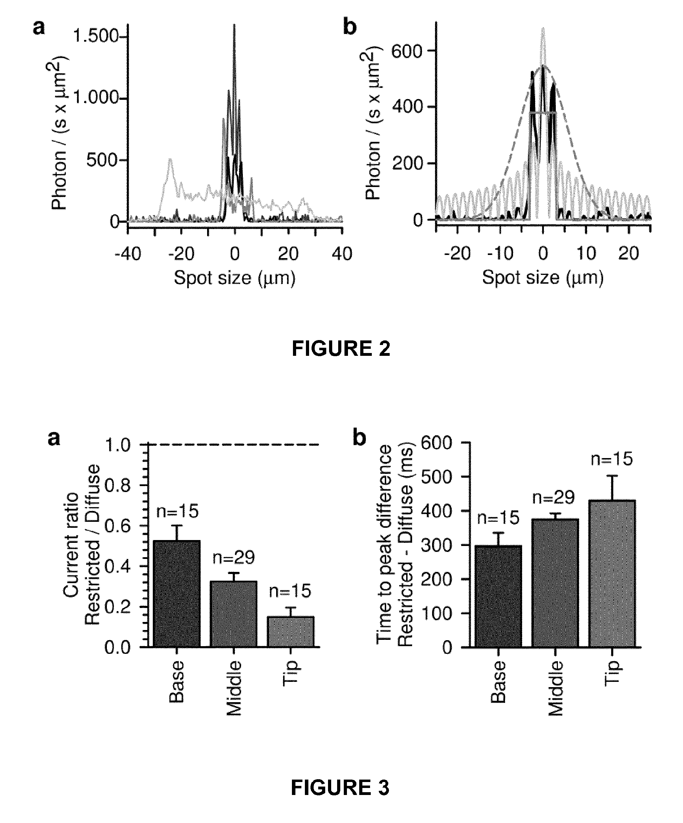

The system of the present invention, in the embodiment with gold coating on a titanium layer, an ultrasensitive CCD camera and a laser light (491 nm), showed that at distances below 10 $\mu$m the light was fairly concentrated around its centre. The spatial profile of the light emitted by the apertureless optical fibre varies in relation of fibre-sensor distance (see Figure 2a, closer signals are darker, respectively 5, 10, 20 and 40 $\mu$m). A close inspection, unexpectedly shows that the measured light profile below 10 $\mu$m is intermediate between a 0 order Bessel function $J_0$ (Williams and Pendry, 2005; Ismail et al., 2010) and a top hat function (Williams and Pendry, 2005) with a width of 6.9 $\mu$m (black line and gray lines respectively in Figure 2b). A Gaussian beam will have lobes extending up to 15 $\mu$m, covering almost the entire length of the OS (dashed grey line in Figure 2b).

Next, we compared the photoresponses of isolated rods from *Xenopus laevis* in response to conventional diffuse light and to restricted illumination as previously described (Lamb et al., 1981; Schnapf, 1983; Jarvinen and Lamb, 2005; Sim et al., 2011), with the modification of using apertureless TOFs according to the present. The conventional optical fibre was used by Sim et al., 2011. As in our experiments they used isolated rods from *Xenopus laevis* and suction electrode recordings. But the fundamental difference is the kind of tapered optical fibre that they used to delivery light stimuli.

In fact, the results from Sim and co-workers clearly demonstrate a Gaussian shape of the intensity distribution, as depicted in a clear figure in their article. The Gaussian profile is measured at a tip-rod distance between 40 to 400 microns and in this range the amplitude of the Gaussian curve is between 20 to 65 microns. Considering the rod length and diameter, with this emitted light they illuminate the entire cell in both used configurations (linear polarized light was tested in transverse and axial configuration to the respect of rod position). Moreover with this laser beam profile they recorded the photocurrent from the entire cell loosing the important results obtained with our system.

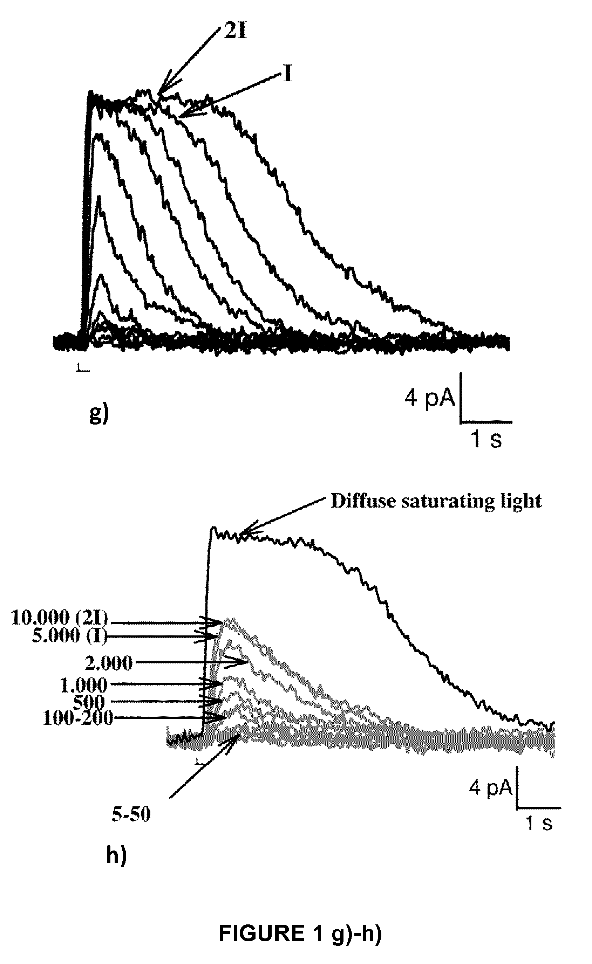

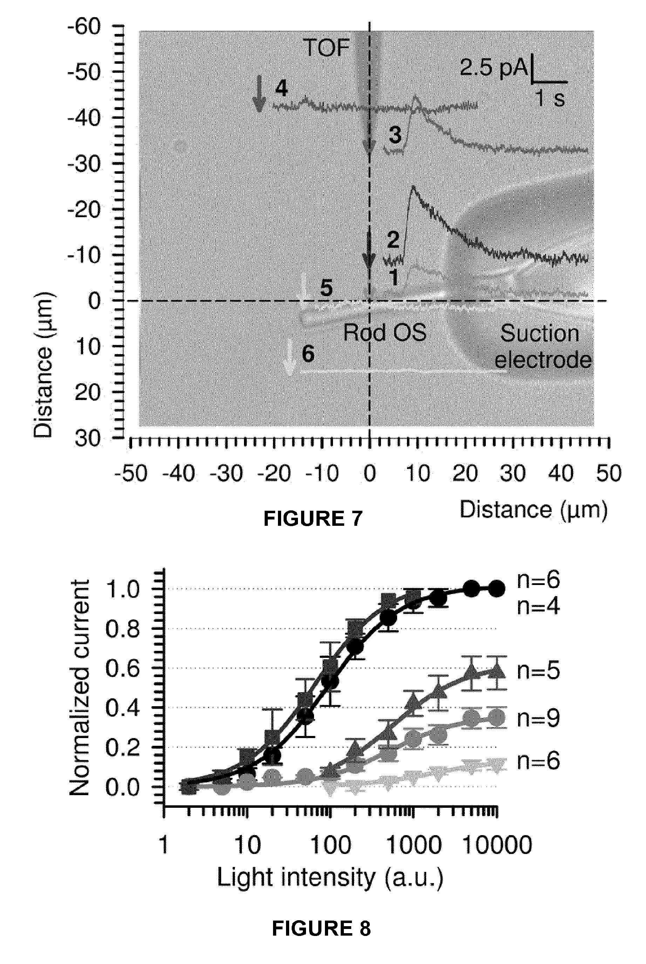

The IS of an isolated intact rod was drawn into a suction electrode, which was then moved towards the TOF that was positioned orthogonally (Figure 1e). A flash of light emitted from apertureless TOFs according to the present invention touching the rod OS illuminated an OS length of approximately 2-7 $\mu$m, which corresponded to 40-140 discs with no lobes, usually present when using traditional light slits (Schnapf 1983). Photoresponses evoked by these saturating flashes had smaller amplitudes with a different time course and did not increase in their duration when the light intensity was doubled. Importantly, this was not seen in previous investigations with gaussian beams of light. When the optical fibre had a hole of 1 $\mu$m in its metallic coating, the exiting light exhibited a Gaussian with the expected lobes. The photoresponses to the diffuse saturating flashes (Figure 1G and Figure 1F black trace) and flashes delivered by optical fibres with a 1 $\mu$m hole (Figure 1F grey traces) had a very similar amplitude and time course. We also used the rod itself as a light detector and verified that the light exiting from the TOF was highly confined with an angle that varied from 5 to 30° (Figure 7). In addition, the transient increase in temperature (Lamb, 1984; Luo et al., 2011) at the TOF tip did not affect the measured photoresponses.

We delivered restricted illuminations at different locations of the OS (base, middle, top). Photoresponses to diffuse (Figure 1H, black traces,) and restricted lights (Figure 1H, gray traces, family of light responses obtained form flashes at different intensity in arbitrary units (a.u.) delivered by the apertureless TOFs in the middle of the OS - arrows) differed in several fundamental features. First, when the base was illuminated, saturating photoresponses had amplitudes equal to 0.52 $\pm$ 0.08 compared to those elicited by diffuse light (i.e., approximately 50% of the dark current). When the middle was illuminated, the saturating photoresponses had lower amplitudes of 0.32 $\pm$ 0.04. At the tip of the OS, the photoresponses had amplitudes of 0.15 $\pm$ 0.05 compared to the photoresponses evoked using diffuse light. Photoresponses to diffuse bright light peaked at 190 $\pm$ 4 ms, while photoresponses to restricted bright light peaked at 480 $\pm$ 40 ms, 560 $\pm$ 20 ms and 620 $\pm$ 80 ms at the base, middle and tip, respectively. The longer delay in which photoresponses to restricted lights reach their peak is presumably caused by the internal diffusion of the second messenger cGMP: activated PDEs in the illuminated compartment quickly hydrolyze cGMP molecules while cGMP present outside will diffuse in.

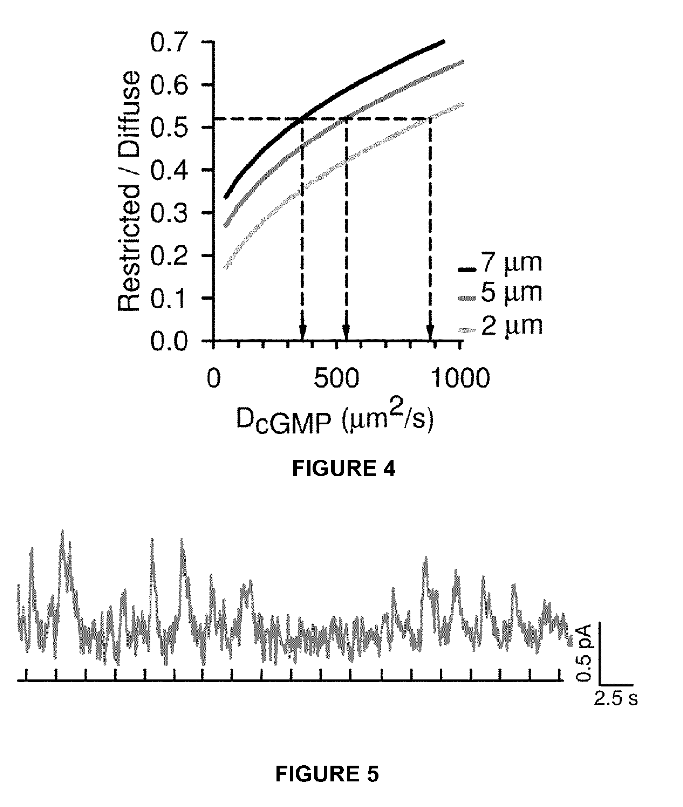

These results (Figure 3a and b) were used to estimate the cGMP diffusion coefficient ($D_{cGMP}$). Using a simple model (Figure 4) in which the base of the OSs is illuminated, we obtained an estimate of $D_{cGMP}$ between 360 and 550 $\mu$m$^2$/s considering that the length of the illuminated portion of the OS corresponds to about 5-7 $\mu$m. This value was in agreement with previous analysis (Gross et al., 2012; Koutalos et al., 1995: original values corrected by a factor of 6.5 for the baffling of the internal discs - Nakatani et al, 2002). The value of DcGMP in water is about 400 $\mu$m$^2$/s (Koutalos et al., 1995) therefore DcGMP molecules diffuse inside the OS as fast as in water suggesting the absence of significant buffers for DcGMP. The other intracellular second messengers of phototransduction, i.e. Ca$^{2+}$ ions, in contrast, are heavily buffered and their diffusion is limited(Nakatani et al, 2002).

Photoresponses caused by restricted illumination at various OS locations differed not only in amplitude but also in additional kinetic properties, thus providing clues regarding the origin of the efficacy gradient of the phototransduction machinery. Using diffuse bright light of increasing intensity, the saturation time $T_S$ (i.e., the period in which all CNG channels were closed) increased almost linearly with the logarithm of the light intensity (Calvert et al., 2001), but not with restricted illuminations. This is an important biological observation which is seen only with our apertureless TOF. When photoresponses reached their maximal amplitude, they did not increase their duration when the light intensity was further increased (Figures 1G and-1H). Moreover, while the maximal slope of the rising phase ($V_{max}$) of photoresponses increased with the diffuse brighter lights, in the presence of restricted lights, $V_{max}$ saturated at all locations, and $V_{max}$ was larger at the OS base than at its tip by nearly 10-fold. These observations suggested that a local saturation of the transduction machinery was reached during the rising phase of the photoresponses, i.e., before the intervention of the Ca$^{2+}$ feedback on the guanylate cyclase activity (Krizaj and Copenhagen, 2002, Gross *et al.,* 2012), responsible for light adaptation, consistently with the linear relationship (independent of the position) between $V_{max}$ and the amplitude of photoresponse. Moreover, because the density of the CNG channels along the OS is uniform (Watanabe and Matthews, 1988; Karpen et al. 1992), the observed gradient of efficacy is associated with the amplification steps between rhodopsin activation and the hydrolysis of cGMP molecules. Because the ratio of the concentrations of the three main proteins involved (rhodopsin: transducin: PDE) is 270:27:1 and because the amplification step is 1:10:10 (Pugh and Lamb, 2000), it is reasonable to hypothesise that saturation occurred for the less abundant protein, namely, PDE. A progressive loss in PDE in aging discs - equivalent to smaller values of $V_{max}$ - explains the observed gradient of efficacy of phototransduction in agreement with the observed loss in PDE (Nishizawa and co-workers (2004) from the base to the tip of the OSs.

The strong gradient of the efficacy of the transduction machinery is likely associated with a lower amplification of the signalling cascade also present when very few photons are absorbed. Therefore, we investigated photoresponses to very dim flashes, as low as corresponding to a single photon absorption, evoked by the TOF at the three positions.

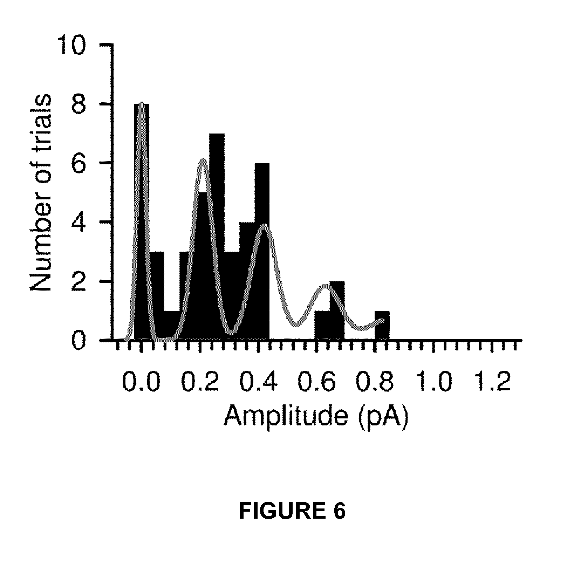

At the OS base, we observed a significant variability with undetectable photoresponses (null events) as well as clear single and multiple events. From these data, we obtained amplitude histograms revealing the expected quantal behaviour described by the Poisson distribution, with a single photon response of about 0.3 pA. When the TOF was moved to the middle of the rod (Figure 5), similar single photon responses, but with a smaller amplitude of 0.21 pA (Figure 6), were observed, but not when the TOF was moved near the tip of the OS. In this case, the same illumination evoking clear photoresponses at the base and middle of the OS did not evoke any detectable photoresponse at the tip. Moreover - at the tip - also if we increase the flash intensity we are unable to record any single photon response and only with almost saturation intensity of light we can record a photocurrent demonstrating that the effect is due to a reduction in event amplitude and not in a reduction in probability of response. Thus, the null responses observed using diffuse flashes (Baylor et al., 1979; Rieke and Baylor, 1998; Whitlock and Lamb, 1999; Solessio et al., 2004) attributed to the failure to activate rhodopsin molecules could be caused as well by the activation of a rhodopsin at the tip of OS, where the phototransduction is about 5 times less effective.

The observed efficacy gradient is likely to originate from a varying density of molecules intervening in phototransduction: indeed, Cholesterol (Boesze-Battaglia et al., 1990) and PDE (Nishizawa et al., 2004) molecules exhibit a different spatial distribution along the OS, which is potentially related to the renewal process of OS discs (Young, 1967). This renewal has a turnover ranging from a few days in mice (Young, 1967) to 6-7 weeks in frogs (Young, 1967; Solessio et al., 2004; Sung and Chuang, 2010) and is part of a physiological process that prevents the accumulation of macromolecules that are damaged by photo oxidative stress due to continuous light absorption and a lack of common antioxidants such as glutathione (Winkler, 2008). The formation of new discs from the base of the OS is balanced by the shedding of aged discs at the tip, which are phagocytised by the retinal pigment epithelium (Ruggiero et al., 2012).

Our results showed that the phototransduction machinery at the tip is about 5 times less effective than at the base or middle of the OS, which may explain why in vertebrate photoreceptors, discs are continuously synthesised at the base and shed at their tip. The exquisite sensitivity of rods is dependent on the combination of the appropriate diffusion (Gross et al., 2012) and catalytic properties of the involved proteins (Leskov et al., 2000; Nishizawa et al., 2004) during vision. If the phototransduction machinery demonstrates a high gradient of efficacy, it remains to explain how light can close CNG channels at the tip of the rod outer segments. The high value of $D_{cGMP}$ provides insight to this question: CNG channels at the tip of the OS are closed because cGMP molecules very rapidly diffuse towards the PDE molecules activated by light.

Performing this study with conventional, non-apertureless optical fibres, these results could not have been achieved.

The following examples further illustrates the invention.

**Example 1**

METHOD SUMMARY

Dissociated rods were obtained from adult male *Xenopus laevis* frogs. All experiments performed in this study were approved by the SISSA's Ethics Committee according to the Italian and European guidelines for animal care (law decree 116/92; 86/609/C.E.). After mechanical isolation, the IS of an isolated and intact rod was drawn into a borosilicate glass electrode filled with Ringer's solution. Rods were viewed under infrared light and stimulated with a 491 nm diffuse light laser (Rapp OptoElectronic, Hamburg, Germany). The restricted light was applied using a TOF. The photoresponses to brief flashes were recorded as previously described (Baylor et al., 1979a,b; Rieke and Baylor, 1998).

**Isolated photoreceptors from the retina:** dissociated rods were obtained from adult male *Xenopus laevis* frogs (Xenopus express, Ancienne Ecole de Vernassal, Le Bourg, France) as previously reported (Marchesi et al., 2012; De Palo et al., 2013). The frogs were dark adapted overnight, and their eyes were enucleated and hemisected under a dissecting microscope with infrared illumination (wavelength 820 nm). Isolated and intact rods were obtained by mechanical dissociation and immersed in a Ringer's solution containing the following (in mM): 110 NaCl, 2.5 KCl, 1 CaCl$_2$, 1.6 MgCl$_2$, and 3 HEPES-NaOH, 0.01 EDTA and 10 Glucose (pH 7.7 - 7.8 buffered with NaOH). All chemicals were purchased from Sigma-Aldrich. After dissociation, the sample was transferred into a silanised recording chamber. All experiments were performed at room temperature (22-24° C).

**Photoresponse recordings:** After mechanical isolation, the IS of an isolated and intact rod was drawn (Rieke and Baylor, 1998) into a silane-coated (Lamb et al., 1981) borosilicate glass electrode (Blaubrand, intramark micropipette, Germany) (internal diameter of 4-6 $\mu$m) filled with Ringer's solution. Rods were viewed under infrared light (wavelength 900 nm) using two cameras (Olympus XM10 and Jenoptic ProgRes MF) with two different magnifications and stimulated with 491 nm diffuse light (Rapp OptoElectronic, Hamburg, Germany, see also Figure 1a-d, which emerged from the 10x objective of an inverted microscope (Olympus IX71). If the maximal photoresponse was more than 12 pA, then the rod was selected for the experiment. The restricted light was applied using an apertureless TOF coated with gold/titanium (Lovalite, Besancon), and the OS was moved against the tip of the TOF to obtain physical contact (Figure 1E), ensuring that the rod and fibre were in the same optical plane. If photoresponses to diffuse lights were identical before and after physical contact, photoresponses to restricted lights were investigated. The TOF was mounted on a micromanipulator (EXFO motorised manipulator PCS-6000) to allow the movement of the tip along the three axes. Photoresponses to brief light flashes, duration 20 ms, were recorded as previously described (Baylor et al. 1979, Rieke and Baylor 1998). For diffused light the increasing intensity of light correspond to 1, 3, 6, 15, 30, 60, 120, 315, 630, 125, 3100, 6300 photoisomerizations (Rh*). For apertureless TOF, the light intensity was 5, 10, 20, 50, 100, 200, 500, 1000, 2000, 5000, 10000 $\mu$W respectively. For optical fibre with an aperture of 1 $\mu$m, light flashes which had a Gaussian profile laser power was 1, 2, 5, 10, 20, 50, 100, 200, 500, 1000 $\mu$W respectively. Axopatch 200A (Molecular Devices) in voltage clamp-mode was used. The current was low-pass filtered at 20 Hz and digitised at 100 Hz. In all of the experiments, a saturated response was measured periodically to confirm the stability of the rod.

**Cameras and laser system:** this system was set up according to the present invention (see Figure 1a-d).

**Single photon response analysis:** Single photon responses were evoked by a series of 50 - 100 dim flashes of light delivered every 4 seconds, with a duration of 20 ms each, by the TOF touching the three different positions (base, middle, tip) of the OS. Responses to a single photoisomerisation were interspersed from failures or multiple photoisomerisations. The mean response was fitted (Rieke and Baylor 1998) as follows:

$$A_{\text{fit}}(t) = A_{\text{mean}} \left( \frac{t}{\tau} \right)^{m-1} e^{-t/\tau},$$

$$(1)$$

where $A_{\text{mean}}$ is the response amplitude and $\tau$ is the time constant. The fitting was performed by selecting these values to minimise the mean square error. For each response, the amplitude was obtained by rescaling the current by a factor A. The obtained histograms were fitted with the equation (Baylor et al. 1979)

$$p(r) = \sum_{k=0}^{\infty} \left( \frac{e^{-m} m^k}{k!} \right) \left[ \frac{1}{2\pi(\sigma_0^2 + k\sigma_1^2)} \right] e^{\frac{-(r-ak)^2}{2\pi(\sigma_0^2 + k\sigma_1^2)}},$$

$$(2)$$

where a is the mean amplitude of the single photon response, $\sigma_1^2$ is its variance and $\sigma_0^2$ is the variance of recording noise. Values of a, $\sigma_0$ and $\sigma_1$ providing the best fit are 0.3 pA, 0.015 pA$^2$ and 0.05 pA$^2$ at the OS base and 0.21 pA, 0.013 pA$^2$ and 0.03 pA$^2$ at the OS center respectively where a is the mean, $\sigma_1^2$ is the variance of the mean and $\sigma_0^2$ is the noise variance.

**Optical fibre characterisation using rods**

The rod was used as a light detector (Figure 7): when the apertureless TOF was moved at various positions, relative to the OS indicated by the numbers, the photoresponses were different. The amplitude of these photoresponse samples the profile of the light exiting from the TOF. Comparison of the photoresponses, labelled 1 and 2, indicates that the beam of light has a conical shape with an angle of about 30 degrees. In addition, by increasing the distance, a larger portion of the OS was illuminated, and a larger photoresponse was recorded. By comparing traces 3 and 4, we deduced that this cone of light was restricted. Moreover, moving the TOF 20 $\mu$m to the side resulted in a significant decrease in the photoresponse, indicating that there were almost no photons hitting the OS.

When the laser was turned on, the temperature of the TOF tip is expected to increase significantly. To test its potential contribution to the measured photoresponses, we compared traces 5 and 6. These transient changes in temperature propagate according to a 3D heat equation and are larger when the tip of the TOF is closer to the rod OS. When the TOF tip was slightly below the rod outer segment, but within a close distance from it (trace 6), no photoresponses were evoked, indicating that transient temperature increases have a negligible effect on recorded photoresponses.

**Photocurrent saturation:** Figure 8 shows normalised current-intensity response with diffuse (black circles, n=6) and restricted light for the base (dark grey triangles, n = 5), middle (grey circles, n= 9) and tip (light gray triangles, n=6) positions. Dark squares (n = 4) show response with optical fibre with 1 $\mu$m hole. The solid lines were fitted according to A=A$_{max}$·I/(I+B) using the following parameters: A$_{max}$ = 1.0, 0.62, 0.36, 0.14 pA/s and B = 87, 570, 520, 1750 a.u. for responses with diffuse (black) and restricted (gray) light. The light intensity is an arbitrary unit (a.u.) that was not comparable between the diffuse and restricted stimulus. Data were expressed as the mean $\pm$ s.e.m. in (n) experiments.

**REFERENCES**

Ellis-Davies, G.C. Caged compounds: photorelease technology for control of cellular chemistry and physiology. Nat. Methods. 4, 619-628 (2007).

Ellis-Davies, G.C. Neurobiology with caged calcium. Chem. Rev. 108, 1603-1613 (2008).

Wieboldt, R., et al. Photolabile precursors of glutamate: synthesis, photochemical properties, and activation of glutamate receptors on a microsecond time scale. Proc. Natl. Acad. Sci. USA 91, 8752-8756 (1994).

Rial Verde, E.M., Zayat, L., Etchenique, R. & Yuste, R. Photorelease of GABA with visible light Using an inorganic caging group. Front. Neural. Circuits. 2, 2 (2008). doi: 10.3389/neuro.04.002.2008.

Volgraf, M., et al. Allosteric control of an ionotropic glutamate receptor with an optical switch. Nat. Chem. Biol. 2, 47-52 (2006).

Banghart, M., Borges, K., Isacoff, E., Trauner, D. & Kramer, R.H. Light-activated ion channels for remote control of neuronal firing. Nat. Neurosci. 7, 1381-1386 (2004).

Boyden, E.S., Zhang, F., Bamberg, E., Nagel, G. & Deisseroth, K. Millisecond-timescale, genetically targeted optical control of neural activity. Nat. Neurosci. 8, 1263-8 (2005).

Zhang, F., et al. Multimodal fast optical interrogation of neural circuitry. Nature 446, 633-639 (2007).

Airan, R.D., Thompson, K.R., Fenno, L.E,, Bernstein, H. & Deisseroth, K. Temporally precise in vivo control of intracellular signalling. Nature 458, 1025-1029 (2009).

Wu, Y.I., et al. A genetically encoded photoactivatable Rac controls the motility of living cells. Nature 461, 104-8 (2009).

Yoshizawa, T. & Wald, G. Pre-lumirhodopsin and the bleaching of visual pigments. Nature 197, 1279-86 (1963).

Kwok-Keng Fung, b. & Stryer, L. Photolyzed rhodopsin catalyzes the exchange of GTP for bound GDP in retinal rod outer segments. Proc. Natl. Acad. Sci. USA 77, 2500-2504 (1980).

Baylor, D. A., Lamb, T. D. & Yau, K. W. Responses of retinal rods to single photons. J. Physiol. 288, 613-634 (1979).

Baylor, D.A., Nunn, B.J. &, Schnapf, J.L. The photocurrent, noise and spectral sensitivity of rods of the monkey Macaca fascicularis. J. Physiol. 357, 575-607 (1984).

Baehr, W. Devlin, M. J. & Applebury, M. L. Isolation and characterization of cGMP phosphodiesterase from bovine rod outer segments. J. Biol. Chem. 254, 11669-11677 (1979).

Leskov, I. B. et al. The gain of rod phototransduction: reconciliation of biochemical and electrophysiological measurements. Neuron 27, 525-537 (2000).

Fung, B. K. Hurley, J. B. & Stryer, L. Flow of information in the light-triggered cyclic nucleotide cascade of vision. Proc. Natl. Acad. Sci. USA 78, 152-156 (1981).

Dumke, C. L. Arshavsky, V. Y. Calvert, P. D. Bownds, M. D. & Pugh, E. N. Jr. Rod outer segment structure influences the apparent kinetic parameters of cyclic GMP phosphodiesterase. J. Gen. Physiol. 103, 1071-1098 (1994).

Melia, T. J. Jr. Cowan, C. W. Angleson, J. K. Wensel, T. G. A comparison of the efficiency of G protein activation by ligand-free and light-activated forms of rhodopsin. Biophys. J. 73, 3182-3191 (1997).

Melia TJ, Malinski JA, He F, Wensel TG. Enhancement of phototransduction protein interactions by lipid surfaces. J. Biol. Chem. 275, 3535-42 (2000).

Lamb, T. D. & Pugh, E. N. Jr. Phototransduction, dark adaptation, and rhodopsin regeneration the proctor lecture. Invest. Ophthalmol. Vis. Sci. 47, 5137-5152 (2006).

Pugh, E. N. Jr. & Lamb, T. D. Phototransduction in vertebrate rods and cones: molecular mechanisms of amplification, recovery and light adaptation. Handbook of Biological Physics. 183-255. Elsevier Amsterdam (2000).

Fesenko, E. E., Kolesnikov, S. S. & Lyubarsky, A.L. Induction by cyclic GMP of cationic conductance in plasma membrane of retinal rod outer segment. Nature 313, 310-313 (1985).

Kaupp, U. B. & Seifert, R. Cyclic nucleotide-gated ion channels. Physiol. Rev. 82, 769-824 (2002).

Young, R. W. The renewal of photoreceptor cell outer segments. J. Cell. Biol. 33, 61-72 (1967).

Solessio, E. et al. Developmental regulation of calcium-dependent feedback in Xenopus rods. J Gen Physiol. 124, 569-585 (2004).

Sung, C. H. & Chuang, J. Z. The cell biology of vision. J. Cell. Biol. 190, 953-63 (2010).

Winkler, B. S. An hypothesis to account for the renewal of outer segments in rod and cone photoreceptor cells: renewal as a surrogate antioxidant. Invest. Ophthalmol. Vis Sci. 49, 3259-3261 (2008).

Ruggiero, L., Connor, M. P., Chen, J., Langen, R. & Finnemann, S. C. Diurnal, localized exposure of phosphatidylserine by rod outer segment tips in wild-type but not Itgb5-/- or Mfge8-/- mouse retina. Proc. Natl. Acad. Sci. USA 109, 8145-8148 (2012).

Baylor, D. A., Lamb, T. D. & Yau, K. W. The membrane current of single rod outer segments. J. Physiol. 288, 589-611(1979).

Rieke, F. & Baylor, D. A. Origin of reproducibility in the responses of retinal rods to single photons. Biophys. J. 75, 1836-1857 (1998).

Schnapf, J. L. Dependence of the single photon response on longitudinal position of absorption in toad rod outer segments. J. Physiol. 343, 147-159 (1983).

Lamb, T. D., McNaughton, P. A. & Yau, K. W. Spatial spread of activation and background desensitization in toad rod outer segments. J. Physiol. 319, 463-496 (1981).

Sim, N., Bessarab, D., Jones, C. M. & Krivitsky, L. Method of targeted delivery of laser beam to isolated retinal rods by fiber optics. Biomed. Opt. Express. 2, 2926-2933 (2011).

Arimoto, Rieko., Saloma, C., Tanaka, T. & Kawata, S. Imaging properties of axicon in a scanning optical system. Applied Optics 31, 6653-6657 (1992).

Ismail, Y., Barnes, G., Mhlanga, T., Belyi, V. & Forbes, A. Higher-order bessel beams with z-dependent cone angles. Opt. Express. 18, 1966-1973 (2010).

Williams., W.B. & Pendry, J.B. Generating Bessel beams by use of localized modes. J. Opt. Soc. Am. 22, 992-997 (2005).

Bélanger, P. A. & Rioux, M. Ring pattern of a lens-axicon doublet illuminated by a Gaussian beam. Appl. Opt. 17, 1080-1088 (1978).

Lamb, T. D. Effects of temperature changes on toad rod photocurrents. J. Physiol. 346, 557-578 (1984).

Luo, D. G., Yue, W. W., Ala-Laurila, P. & Yau, K. W. Activation of visual pigments by light and heat. Science 332, 1307-1312 (2011).

Gross, O. P., Pugh, E. N. Jr. & Burns, M. E. Calcium feedback to cGMP synthesis strongly attenuates single-photon responses driven by long rhodopsin lifetimes. Neuron 76, 370-382 (2012).

Koutalos, Y., Nakatani, K. & Yau, K. W. Cyclic GMP diffusion coefficient in rod photoreceptor outer segments. Biophys. J. 68, 373-382 (1985).

Nakatani, K., Chen, C. & Koutalos, Y. Calcium diffusion coefficient in rod photoreceptor outer segments. Biophys. J. 82, 728-739 (2002).

Calvert, P. D. et al. Membrane protein diffusion sets the speed of rod phototransduction. Nature 411, 90-94 (2001).

Krizaj, D. & Copenhagen, D. R. Calcium regulation in photoreceptors. Front. Biosci. 7, 2023-2044 (2002).

Karpen, J. W., Loney, D.A. & Baylor, D. A. Cyclic GMP-activated channels of salamander retinal rods: spatial distribution and variation of responsiveness. J. Physiol. 448, 257-274 (1992).

Watanabe, S. & Matthews, G. Regional distribution of cGMP-activated ion channels in the plasma membrane of the rod photoreceptor. J. Neurosci. 8, 2334-2337 (1988).

Nishizawa, Y., Yamazaki, A. & Usukura, J. Electron microscopic localization of PDE $\alpha$, $\beta$ and $\delta$ in frog retina. Invest Ophthalmo. Vis. Sci. 45, 5353 (2004).

Whitlock, G. G. & Lamb, T. D. Variability in the time course of single photon responses from toad rods: termination of rhodopsin's activity. Neuron 23, 337-351 (1999).

Boesze-Battaglia, K. Fliesler S. J. & Albert, A. D. Relationship of cholesterol content to spatial distribution and age of disc membranes in retinal rod outer segments. J. Biol. Chem. 265, 18867-18870 (1990).

Marchesi, A., Mazzolini, M. & Torre, V. Gating of cyclic nucleotide-gated channels is voltage dependent. Nat. Commun. 3, 973 doi:10.1038/ncomms1972 (2012).

De Palo, G. et al. Common dynamical features of sensory adaptation in photoreceptors and olfactory sensory neurons. Sci. Rep. 3, 1251. doi: 10.1038/srep01251 (2013).

Rieke, F. & Baylor, D. A. Origin of reproducibility in the responses of retinal rods to single photons. Biophys. J. 75, 1836-1857 (1998).

Lamb, T. D., McNaughton, P. A. & Yau, K. W. Spatial spread of activation and background desensitization in toad rod outer segments. J. Physiol. 319, 463-496 (1981).

Forti, S., Menini, A., Rispoli, G. & Torre, V. Kinetics of phototransduction in retinal rods of the newt Triturus cristatus. J. Physiol. 419, 265-95 (1989).

Baylor, D. A., Lamb, T. D. & Yau, K. W. The membrane current of single rod outer segments. J. Physiol. 288, 589-611(1979).

Baylor, D. A., Lamb, T. D. & Yau, K. W. Responses of retinal rods to single photons. J. Physiol. 288, 613-634 (1979).

O.P. Gross, E.N. Pugh, and M.E. Burns. Spatiotemporal cGMP dynamics in living mouse rods. Biophysical Journal, 102(8):1775-1784, 2012.

Y. Koutalos, K. Nakatani, and KW Yau. Cyclic GMP diffusion coefficient in rod photoreceptor outer segments. Biophysical journal, 68(1):373-382, 1995.

Shu-Ichi Watanabe and Gary Matthews. Regional distribution of cGMP-activated ion channels in the plasma membrane of the rod photoreceptor. The Journal of neuroscience, 8(7):2334-2337, 1988.

# EP 2 881 747 A1

JW Karpen, DA Loney, and DA Baylor. Cyclic GMP-activated channels of salamander retinal rods: spatial distribution and variation of responsiveness. The Journal of Physiology, 448(1):257-274, 1992.

W. J. DeGrip, E. N. Pugh, and D.G. Stavenga. Molecular mechanisms in visual transduction. Elsevier, Berlin, 2000.

J. Reingruber and D. Holcman. The dynamics of phosphodiesterase activation in rods and cones. Biophysical journal, 94(6):1954-1970, 2008.

## Claims

1. An apparatus for use in photonics, nanotechnology, microscopy and biology, in particular in optogenetics, **characterized in that** it comprises at least one apertureless optical fibre.

2. The apparatus according to claim 1, wherein said apertureless optical fibre is coated with a metal film.

3. The apparatus according to claim 2, wherein said apertureless optical fibre is coated by gold on titanium layer or by gold on chromium.

4. The apparatus according to any one of claims 1-3, wherein said apertureless optical fibre shows a light profile intermediate between a 0 order Bessel function $J_0$ and/or a top hat function.

5. The apparatus according to claim 4, wherein said apertureless optical fibre has a diameter of the inner region ranging from 2 to 30 $\mu$m and a far field light cone semiaperture ranging from 5 to 30 degs.

6. The apparatus according to any one of claims 1-5, further comprising an optical light generating device ranging from ultraviolet to infrared region.

7. The apparatus according to claim 6, wherein said light generating device a laser device.

8. The apparatus according to any one of claims 1-7, wherein said light generating device is coupled with a microscope.

9. The apparatus according to claim 8, wherein said microscope is an inverted microscope.

10. The apparatus according to any one of claims 1-9, wherein said apertureless optical fibre is mounted on a micromanipulator.

11. The apparatus according to any one of claims 1-10, which is coupled with a camera.

12. The apparatus according to claim 11, wherein said camera is a dual camera port with different magnification.

13. The apparatus according to claim 12, wherein said camera is an ultrasensitive CCD camera.

14. The apparatus according to any one of claims 1-13, wherein a device for programming pulse trains is provided.

15. The apparatus according to claim 14, wherein said programming device is able to programming pulse trains of arbitrary length with intensities over a dynamic range of 4 to 5 orders of magnitude.

16. A laser device according to any one of claims 7-15, which is a 491 nm laser.

17. A laser device according to any one of claims 7-16, wherein said light laser further comprises at least an acousto-optic modulator, a rapid filter wheel, optionally with a set of neutral density filters, one or more port for fibre optics with shutters on each port, a microcontroller and a software to program pulse trains.

**a**
Cube with
beam splitter
Microscope
Camera
port 1
Magnification
optic
Camera
port 2

**b** Camera port 1
2 μm

**c** Camera port 2
2 μm

**d)**
Fibre
coupling (4)
Filter wheel (3)
AOM (2)
Laser head (1)
Laser
controller (5)
AOM controller (6)
(c)
(b)
(a)

FIGURE 1 a)-d)

e)

Suction
electrode

f)

FIGURE 1 e)-f)

**FIGURE 1 g)-h)**

FIGURE 2

FIGURE 3

EP 2 881 747 A1

FIGURE 4

FIGURE 5

18

**FIGURE 6**

**FIGURE 7**

**FIGURE 8**

Europäisches
Patentamt
European
Patent Office
Office européen
des brevets

**EUROPEAN SEARCH REPORT**

Application Number

EP 13 19 5786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/141939 A1 (ZHAN QIWEN [US]) 10 June 2010 (2010-06-10) * abstract * * paragraphs [0012] - [0014], [0043], [0059], [0069], [0074], [0079] * | 1-17 | INV. G01Q60/18 G01Q60/22 G02B6/26 |
| X | US 2010/306888 A1 (TISCHLER JONATHAN R [IL] ET AL TISCHLER JONATHAN R [US] ET AL) 2 December 2010 (2010-12-02) * abstract * * paragraphs [0037] - [0039] * | 1-8,10 | ADD. G02B21/00 |
| X | TOMASZ J ANTOSIEWICZ ET AL: "Superfocusing on a dielectric-metal-dielectric apertureless scanning near-field optical microscope probe", TRANSPARENT OPTICAL NETWORKS, 2009. ICTON '09. 11TH INTERNATIONAL CONFERENCE ON, IEEE, PISCATAWAY, NJ, USA, 28 June 2009 (2009-06-28), pages 1-4, XP031498742, ISBN: 978-1-4244-4825-8 * the whole document * | 1,2,4-6, 10 | |
| X | ENRICO DILENA ET AL: "CuIn x Ga 1- x S 2 Nanocrystals with Tunable Composition and Band Gap Synthesized via a Phosphine-Free and Scalable Procedure", CHEMISTRY OF MATERIALS, vol. 25, no. 15, 13 August 2013 (2013-08-13), pages 3180-3187, XP055115246, ISSN: 0897-4756, DOI: 10.1021/cm401563u * Section 2.10 * | 1,4,6,10 | |

TECHNICAL FIELDS SEARCHED (IPC)

G01Q
G02B

-/--

The present search report has been drawn up for all claims

| Place of search | Date of completion of the search | Examiner |
|---|---|---|
| The Hague | 25 April 2014 | Cohen, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 13 19 5786

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | W. DING ET AL: "Internal excitation and superfocusing of surface plasmon polaritons on a silver-coated optical fiber tip", PHYSICAL REVIEW A, vol. 75, no. 6, 1 June 2007 (2007-06-01), XP055115304, ISSN: 1050-2947, DOI: 10.1103/PhysRevA.75.063822 * the whole document * | 1-5 | |
| A | KAWATA YOSHIMASA ET AL: "Feasibility of molecular-resolution fluorescence near-field microscopy using multi-photon absorption and field enhancement near a sharp tip", JOURNAL OF APPLIED PHYSICS, AMERICAN INSTITUTE OF PHYSICS, 2 HUNTINGTON QUADRANGLE, MELVILLE, NY 11747, vol. 85, no. 3, 1 February 1999 (1999-02-01), pages 1294-1301, XP012046623, ISSN: 0021-8979, DOI: 10.1063/1.369260 Section 111. Laser Powers and Pulse Widths; * abstract * | 14,15,17 | |
| A | KIM J ET AL: "Terahertz near-field imaging of biomolecular nanostructures", INFRARED, MILLIMETER AND TERAHERTZ WAVES, 2008. IRMMW-THZ 2008. 33RD INTERNATIONAL CONFERENCE ON, IEEE, PISCATAWAY, NJ, USA, 15 September 2008 (2008-09-15), page 1, XP031398091, ISBN: 978-1-4244-2119-0 * the whole document * | 14,15,17 | TECHNICAL FIELDS SEARCHED (IPC) |

-/--

The present search report has been drawn up for all claims

| Place of search | Date of completion of the search | Examiner |
|---|---|---|
| The Hague | 25 April 2014 | Cohen, Adam |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

................................................................................

& : member of the same patent family, corresponding
     document

EPO FORM 1503 03.82 (P04C01)

Europäisches
Patentamt

European
Patent Office

Office européen
des brevets

# EUROPEAN SEARCH REPORT

Application Number

EP 13 19 5786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THOMA A ET AL: "Influence of tip-sample interaction in a time-domain terahertz scattering near field scanning microscope", APPLIED PHYSICS LETTERS, AMERICAN INSTITUTE OF PHYSICS, US, vol. 92, no. 25, 23 June 2008 (2008-06-23), pages 251103-251103, XP012107651, ISSN: 0003-6951, DOI: 10.1063/1.2949858 * the whole document * | 14,15,17 | |
| A | US 2004/089816 A1 (QUAKE STEPHEN R [US] ET AL) 13 May 2004 (2004-05-13) * abstract * * paragraph [0013]; claim 9 * | 17 | |

TECHNICAL FIELDS
SEARCHED        (IPC)

The present search report has been drawn up for all claims

| Place of search | Date of completion of the search | Examiner |
|---|---|---|
| The Hague | 25 April 2014 | Cohen, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 5786

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2014

| Patent document cited in search report | | Publication date | Patent family member(s) | | Publication date |
|---|---|---|---|---|---|
| US 2010141939 | A1 | 10-06-2010 | EP 2038894 A2<br>JP 2009541742 A<br>KR 20090051031 A<br>US 2010141939 A1<br>WO 2007149534 A2 | | 25-03-2009<br>26-11-2009<br>20-05-2009<br>10-06-2010<br>27-12-2007 |
| US 2010306888 | A1 | 02-12-2010 | US 2010306888 A1<br>WO 2008115950 A1 | | 02-12-2010<br>25-09-2008 |
| US 2004089816 | A1 | 13-05-2004 | AU 2003257990 A1<br>EP 1535300 A2<br>JP 2005535878 A<br>US 2004089816 A1<br>WO 2004015455 A2 | | 25-02-2004<br>01-06-2005<br>24-11-2005<br>13-05-2004<br>19-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102151367
- US 2011224554 A
- WO 2011005978 A
- US 20090304551 A


**Non-patent literature cited in the description**

- **ELLIS-DAVIES GC.** Caged compounds: photorelease technology for control of cellular chemistry and physiology. *Nat Methods,* 2007, vol. 4, 619-628
- **ELLIS-DAVIES GC.** Neurobiology with caged calcium. *Chem Rev,* 2008, vol. 108, 1603-1613
- **WIEBOLDT R ; GEE KR ; NIU L ; RAMESH D.** Carpenter BK, Hess GP: Photolabile precursors of glutamate: synthesis, photochemical properties, and activation of glutamate receptors on a microsecond time scale. *Proc Natl Acad Sci U S A,* 1994, vol. 91, 8752-8756
- **RIAL VERDE EM ; ZAYAT L ; ETCHENIQUE R ; YUSTE R.** Photorelease of GABA with visible light using an inorganic caging group. *Front Neural Circuits,* 2008, vol. 2, 2
- **VOLGRAF M ; GOROSTIZA P ; NUMANO R ; KRAMER RH ; ISACOFF EY ; TRAUNER D.** Allosteric control of an ionotropic glutamate receptor with an optical switch. *Nat Chem Biol,* 2006, vol. 2, 47-52
- **BANGHART M ; BORGES K ; ISACOFF E ; TRAUNER D ; KRAMER RH.** Light activated ion channels for remote control of neuronal firing. *Nat Neurosci,* 2004, vol. 7, 1381-1386
- **BOYDEN ES ; ZHANG F ; BAMBERG E ; NAGEL G ; DEISSEROTH K.** Millisecond-timescale, genetically targeted optical control of neural activity. *Nat Neurosci,* 2005, vol. 8, 1263-1268
- **ZHANG F ; WANG LP ; BRAUNER M ; LIEWALD JF ; KAY K ; WATZKE N ; WOOD PG ; BAMBERG E ; NAGEL G ; GOTTSCHALK A et al.** Multimodal fast optical interrogation of neural circuitry. *Nature,* 2007, vol. 446, 633-639
- **AIRAN RD ; THOMPSON KR ; FENNO LE ; BERNSTEIN H ; DEISSEROTH K.** Temporally precise in vivo control of intracellular signalling. *Nature,* 2009, vol. 458, 1025-1029
- **WU YI ; FREY D ; LUNGU OI ; JAEHRIG A ; SCHLICHTING I ; KUHLMAN B ; HAHN KM.** A genetically encoded photoactivatable Rac controls the motility of living cells. *Nature,* 2009, vol. 461, 104-108
- **ELLIS-DAVIES, G.C.** Caged compounds: photorelease technology for control of cellular chemistry and physiology. *Nat. Methods,* 2007, vol. 4, 619-628
- **ELLIS-DAVIES, G.C.** Neurobiology with caged calcium. *Chem. Rev.,* 2008, vol. 108, 1603-1613
- **WIEBOLDT, R. et al.** Photolabile precursors of glutamate: synthesis, photochemical properties, and activation of glutamate receptors on a microsecond time scale. *Proc. Natl. Acad. Sci. USA,* 1994, vol. 91, 8752-8756
- **RIAL VERDE, E.M. ; ZAYAT, L. ; ETCHENIQUE, R. ; YUSTE, R.** Photorelease of GABA with visible light Using an inorganic caging group. *Front. Neural. Circuits.,* 2008, vol. 2, 2
- **VOLGRAF, M. et al.** Allosteric control of an ionotropic glutamate receptor with an optical switch. *Nat. Chem. Biol,* 2006, vol. 2, 47-52
- **BANGHART, M. ; BORGES, K. ; ISACOFF, E. ; TRAUNER, D. ; KRAMER, R.H.** Light-activated ion channels for remote control of neuronal firing. *Nat. Neurosci.,* 2004, vol. 7, 1381-1386
- **BOYDEN, E.S. ; ZHANG, F. ; BAMBERG, E. ; NAGEL, G. ; DEISSEROTH, K.** Millisecond-timescale, genetically targeted optical control of neural activity. *Nat. Neurosci.,* 2005, vol. 8, 1263-8
- **ZHANG, F. et al.** Multimodal fast optical interrogation of neural circuitry. *Nature,* 2007, vol. 446, 633-639
- **AIRAN, R.D. ; THOMPSON, K.R. ; FENNO, L.E ; BERNSTEIN, H. ; DEISSEROTH, K.** Temporally precise in vivo control of intracellular signalling. *Nature,* 2009, vol. 458, 1025-1029
- **WU, Y.I. et al.** A genetically encoded photoactivatable Rac controls the motility of living cells. *Nature,* 2009, vol. 461, 104-8
- **YOSHIZAWA, T. ; WALD, G.** Pre-lumirhodopsin and the bleaching of visual pigments. *Nature,* 1963, vol. 197, 1279-86
- **KWOK-KENG FUNG, B. ; STRYER, L.** Photolyzed rhodopsin catalyzes the exchange of GTP for bound GDP in retinal rod outer segments. *Proc. Natl. Acad. Sci. USA,* 1980, vol. 77, 2500-2504

- **BAYLOR, D. A. ; LAMB, T. D. ; YAU, K. W.** Responses of retinal rods to single photons. *J. Physiol.,* 1979, vol. 288, 613-634
- **BAYLOR, D.A. ; NUNN, B.J. ; SCHNAPF, J.L.** The photocurrent, noise and spectral sensitivity of rods of the monkey Macaca fascicularis. *J. Physiol.,* 1984, vol. 357, 575-607
- **BAEHR, W. ; DEVLIN, M. J. ; APPLEBURY, M. L.** Isolation and characterization of cGMP phosphodiesterase from bovine rod outer segments. *J. Biol. Chem.,* 1979, vol. 254, 11669-11677
- **LESKOV, I. B. et al.** The gain of rod phototransduction: reconciliation of biochemical and electrophysiological measurements. *Neuron,* 2000, vol. 27, 525-537
- **FUNG, B. K. ; HURLEY, J. B. ; STRYER, L.** Flow of information in the light-triggered cyclic nucleotide cascade of vision. *Proc. Natl. Acad. Sci. USA,* 1981, vol. 78, 152-156
- **DUMKE, C. L. ; ARSHAVSKY, V. Y. ; CALVERT, P. D. ; BOWNDS, M. D. ; PUGH, E. N. JR.** Rod outer segment structure influences the apparent kinetic parameters of cyclic GMP phosphodiesterase. *J. Gen. Physiol.,* 1994, vol. 103, 1071-1098
- **MELIA, T. J. JR. ; COWAN, C. W. ; ANGLESON, J. K. ; WENSEL, T. G.** A comparison of the efficiency of G protein activation by ligand-free and light-activated forms of rhodopsin. *Biophys. J.,* 1997, vol. 73, 3182-3191
- **MELIA TJ ; MALINSKI JA ; HE F ; WENSEL TG.** Enhancement of phototransduction protein interactions by lipid surfaces. *J. Biol. Chem,* 2000, vol. 275, 3535-42
- **LAMB, T. D. ; PUGH, E. N. JR.** Phototransduction, dark adaptation, and rhodopsin regeneration the proctor lecture. *Invest. Ophthalmol. Vis. Sci.,* 2006, vol. 47, 5137-5152
- Phototransduction in vertebrate rods and cones: molecular mechanisms of amplification, recovery and light adaptation. **PUGH, E. N. JR. ; LAMB, T. D.** Handbook of Biological Physics. Elsevier, 2000, 183-255
- **FESENKO, E. E. ; KOLESNIKOV, S. S. ; LYUBARSKY, A.L.** Induction by cyclic GMP of cationic conductance in plasma membrane of retinal rod outer segment. *Nature,* 1985, vol. 313, 310-313
- **KAUPP, U. B. ; SEIFERT, R.** Cyclic nucleotide-gated ion channels. *Physiol. Rev.,* 2002, vol. 82, 769-824
- **YOUNG, R. W.** The renewal of photoreceptor cell outer segments. *J. Cell. Biol.,* 1967, vol. 33, 61-72
- **SOLESSIO, E. et al.** Developmental regulation of calcium-dependent feedback in Xenopus rods. *J Gen Physiol.,* 2004, vol. 124, 569-585
- **SUNG, C. H. ; CHUANG, J. Z.** The cell biology of vision. *J. Cell. Biol.,* 2010, vol. 190, 953-63

- **WINKLER, B. S.** An hypothesis to account for the renewal of outer segments in rod and cone photoreceptor cells: renewal as a surrogate antioxidant. *Invest. Ophthalmol. Vis Sci.,* 2008, vol. 49, 3259-3261
- **RUGGIERO, L. ; CONNOR, M. P. ; CHEN, J. ; LANGEN, R. ; FINNEMANN, S. C.** Diurnal, localized exposure of phosphatidylserine by rod outer segment tips in wild-type but not Itgb5-/- or Mfge8-/- mouse retina. *Proc. Natl. Acad. Sci. USA,* 2012, vol. 109, 8145-8148
- **BAYLOR, D. A. ; LAMB, T. D. ; YAU, K. W.** The membrane current of single rod outer segments. *J. Physiol.,* 1979, vol. 288, 589-611
- **RIEKE, F. ; BAYLOR, D. A.** Origin of reproducibility in the responses of retinal rods to single photons. *Biophys. J.,* 1998, vol. 75, 1836-1857
- **SCHNAPF, J. L.** Dependence of the single photon response on longitudinal position of absorption in toad rod outer segments. *J. Physiol.,* 1983, vol. 343, 147-159
- **LAMB, T. D. ; MCNAUGHTON, P. A. ; YAU, K. W.** Spatial spread of activation and background desensitization in toad rod outer segments. *J. Physiol.,* 1981, vol. 319, 463-496
- **SIM, N. ; BESSARAB, D. ; JONES, C. M. ; KRIVITSKY, L.** Method of targeted delivery of laser beam to isolated retinal rods by fiber optics. *Biomed. Opt. Express.,* 2011, vol. 2, 2926-2933
- **ARIMOTO, RIEKO. ; SALOMA, C. ; TANAKA, T. ; KAWATA, S.** Imaging properties of axicon in a scanning optical system. *Applied Optics,* 1992, vol. 31, 6653-6657
- **ISMAIL, Y. ; BARNES, G. ; MHLANGA, T. ; BELYI, V. ; FORBES, A.** Higher-order bessel beams with z-dependent cone angles. *Opt. Express.,* 2010, vol. 18, 1966-1973
- **WILLIAMS., W.B. ; PENDRY, J.B.** Generating Bessel beams by use of localized modes. *J. Opt. Soc. Am.,* 2005, vol. 22, 992-997
- **BÉLANGER, P. A. ; RIOUX, M.** Ring pattern of a lens-axicon doublet illuminated by a Gaussian beam. *Appl. Opt.,* 1978, vol. 17, 1080-1088
- **LAMB, T. D.** Effects of temperature changes on toad rod photocurrents. *J. Physiol.,* 1984, vol. 346, 557-578
- **LUO, D. G. ; YUE, W. W. ; ALA-LAURILA, P. ; YAU, K. W.** Activation of visual pigments by light and heat. *Science,* 2011, vol. 332, 1307-1312
- **GROSS, O. P. ; PUGH, E. N. JR. ; BURNS, M. E.** Calcium feedback to cGMP synthesis strongly attenuates single-photon responses driven by long rhodopsin lifetimes. *Neuron,* 2012, vol. 76, 370-382
- **KOUTALOS, Y. ; NAKATANI, K. ; YAU, K. W.** Cyclic GMP diffusion coefficient in rod photoreceptor outer segments. *Biophys. J.,* 1985, vol. 68, 373-382

- **NAKATANI, K. ; CHEN, C. ; KOUTALOS, Y.** Calcium diffusion coefficient in rod photoreceptor outer segments. *Biophys. J.,* 2002, vol. 82, 728-739
- **CALVERT, P. D. et al.** Membrane protein diffusion sets the speed of rod phototransduction. *Nature,* 2001, vol. 411, 90-94
- **KRIZAJ, D. ; COPENHAGEN, D. R.** Calcium regulation in photoreceptors. *Front. Biosci.,* 2002, vol. 7, 2023-2044
- **KARPEN, J. W. ; LONEY, D.A. ; BAYLOR, D. A.** Cyclic GMP-activated channels of salamander retinal rods: spatial distribution and variation of responsiveness. *J. Physiol.,* 1992, vol. 448, 257-274
- **WATANABE, S. ; MATTHEWS, G.** Regional distribution of cGMP-activated ion channels in the plasma membrane of the rod photoreceptor. *J. Neurosci.,* 1988, vol. 8, 2334-2337
- **NISHIZAWA, Y. ; YAMAZAKI, A. ; USUKURA, J.** Electron microscopic localization of PDE $\alpha$, $\beta$ and $\delta$ in frog retina. *Invest Ophthalmo. Vis. Sci.,* 2004, vol. 45, 5353
- **WHITLOCK, G. G. ; LAMB, T. D.** Variability in the time course of single photon responses from toad rods: termination of rhodopsin's activity. *Neuron,* 1999, vol. 23, 337-351
- **BOESZE-BATTAGLIA, K. ; FLIESLER S. J. ; ALBERT, A. D.** Relationship of cholesterol content to spatial distribution and age of disc membranes in retinal rod outer segments. *J. Biol. Chem.,* 1990, vol. 265, 18867-18870
- **MARCHESI, A. ; MAZZOLINI, M. ; TORRE, V.** Gating of cyclic nucleotide-gated channels is voltage dependent. *Nat. Commun.,* 2012, vol. 3, 973
- **DE PALO, G. et al.** ommon dynamical features of sensory adaptation in photoreceptors and olfactory sensory neurons. *Sci. Rep.,* 2013, vol. 3, 1251
- **RIEKE, F. ; BAYLOR, D. A.** Origin of reproducibility in the responses of retinal rods to single photons. *Biophys. J,* 1998, vol. 75, 1836-1857
- **LAMB, T. D. ; MCNAUGHTON, P. A ; YAU, K. W.** Spatial spread of activation and background desensitization in toad rod outer segments. *J. Physiol.,* 1981, vol. 319, 463-496
- **FORTI, S. ; MENINI, A. ; RISPOLI, G. ; TORRE, V.** Kinetics of phototransduction in retinal rods of the newt Triturus cristatus. *J. Physiol.,* 1989, vol. 419, 265-95
- **BAYLOR, D. A. ; LAMB, T. D. ; YAU, K. W.** The membrane current of single rod outer segments. *J. Physiol,* 1979, vol. 288, 589-611
- **O.P. GROSS ; E.N. PUGH ; M.E. BURNS.** Spatiotemporal cGMP dynamics in living mouse rods. *Biophysical Journal,* 2012, vol. 102 (8), 1775-1784
- **Y. KOUTALOS ; K. NAKATANI ; KW YAU.** Cyclic GMP diffusion coefficient in rod photoreceptor outer segments. *Biophysical journal,* 1995, vol. 68 (1), 373-382
- **SHU-ICHI WATANABE ; GARY MATTHEWS.** Regional distribution of cGMP-activated ion channels in the plasma membrane of the rod photoreceptor. *The Journal of neuroscience,* 1988, vol. 8 (7), 2334-2337
- **JW KARPEN ; DA LONEY ; DA BAYLOR.** Cyclic GMP-activated channels of salamander retinal rods: spatial distribution and variation of responsiveness. *The Journal of Physiology,* 1992, vol. 448 (1), 257-274
- **W. J. DEGRIP ; E. N. PUGH ; D.G. STAVENGA.** Molecular mechanisms in visual transduction. Elsevier, 2000
- **J. REINGRUBER ; D. HOLCMAN.** The dynamics of phosphodiesterase activation in rods and cones. *Biophysical journal,* 2008, vol. 94 (6), 1954-1970